# EUROPÄISCHE PATENTSCHRIFT

(11) **EP 1 128 901 B1**
(45) Veröffentlichungstag und Bekanntmachung des Hinweises auf die Patenterteilung: **26.03.2003**
(21) Anmeldenummer: 99970946.2
(22) Anmeldetag: 26.10.1999
(51) Int. Cl.: B01D 71/02, B01D 69/10, B01D 53/22

(54) **THERMOMEMBRANVERFAHREN UND -VORRICHTUNG**
THERMOMEMBRANE METHOD AND DEVICE
PROCEDE ET DISPOSITIF A THERMOMEMBRANE

(30) Priorität: 26.10.1998 DE 19849216
(43) Veröffentlichungstag der Anmeldung: 05.09.2001
(73) Patentinhaber: Noack, Andreas, 55130 Mainz (DE)
(72) Erfinder: Noack, Andreas, 55130 Mainz (DE)
(74) Vertreter: Maiwald, Walter, Dr. Dipl.-Chem.
(86) Internationale Anmeldenummer: EP9908069
(87) Internationale Veröffentlichungsnummer: WO00024500

(56) Entgegenhaltungen:
- EP-A- 0 358 110
- WO-A-94/23814
- WO-A-96/09877
- WO-A-97/35805
- DE-A- 3 918 430
- DE-C- 3 225 751
- GB-A- 1 572 796

## Beschreibung

Die vorliegende Erfindung betrifft ein Verfahren zur Trennung von Fluidgemischen mindestens zwei Komponenten, wobei das Fluidgemisch durch Kontakt mit einer selektiv adsorbierenden Membran in Verbindung mit einer porösen Transportmatrix unter Ausnutzung von im wesentlichen kinetischen Anreicherungseffekten in Kombination mit thermischer Desorption der Sorbate aufgetrennt wird.

Ferner betrifft die vorliegende Erfindung eine Vorrichtung zur Auftrennung eines Fluidgemisches aus mindestens zwei Komponenten, umfassend eine Kohlenstoffmembran an oder auf einer Oberfläche einer porösen Transportmatrix, wobei die Membran an einen ersten Arbeitsbereich angrenzt und eine räumlich von der Membran entfernt liegende weitere Oberfläche der Transportmatrix an einen zweiten Arbeitsbereich angrenzt, sowie Einrichtungen zum Erwärmen der Oberfläche und/oder eines Teils der Transportmatrix, welcher an dem zweiten Arbeitsbereich anliegt.

Die vorliegende Erfindung betrifft weiterhin die Verwendung des obengenannten Verfahrens bzw, der genannten Vorrichtung zur Reinigung von verunreinigter Zuoder Abluft, zur Anreicherung einer Komponente aus Prozeßgasen, insbesondere Wasserstoff und/oder zur Trennung von Luft.

Die Trennung von Fluidgemischen in ihre Komponenten stellt ein wirtschaftlich sehr bedeutendes Gebiet der Technik dar. Sie reicht von der Gewinnung einzelner Gemisch-komponenten in reinster Form bis zur Erzeugung von Produktgemischen, in denen wenigstens eine Komponente in angereicherter Form vorliegt, relativ zum Gehalt im Ausgangsgemisch. Typische Aufgabenbereiche umfassen die Rückgewinnung von Lösungsmitteldämpfen, die Gewinnung von Kohlenwasserstoffen und/oder Wasserstoff aus entsprechenden Gemischen, beispielsweise nach Crack-Prozessen ("Rektisorptionsverfahren"), aber auch die Trennung von Permanentgasen aus natürlichen Vorkommen oder technischen Prozessen, wie beispielsweise die Trennung von Sauerstoff und Stickstoff aus Luft oder die Rückgewinnung von Wasserstoff aus Ammoniak/Wasserstoffgemischen beim Haber-Bosch-Prozeß oder in anderen technischen Prozeßgasen.

Auch die Reinigung von Luft oder Abluft von schädlichen, umweltbelastenden oder gar toxischen Komponenten erfordert die Abtrennung einzelner Komponenten aus komplexen Fluidgemischen. In den letzten Jahren haben derartige Reinigungsverfahren eine zunehmende Bedeutung erfahren, wie etwa bei der Raumluftreinigung in industriellen Produktionsstätten, z.B. in Reinsträumen der Halbleiterindustrie, oder auch bei der Zuführung von gereinigter Umgebungsluft in den Innenraum von Kraftfahrzeugen.

Die Trennung von Gas- und Gas/Dampfgemischen, sowie die Abtrennung einzelner Komponenten aus derartigen Gemischen erfolgt technisch meist durch Adsorption, oder in jüngster Zeit, einhergehend mit der Entwicklung selektiver Membranen, auch unter Anwendung von Permeationsverfahren.

Die Adsorption nutzt die Eigenschaft poröser Feststoffe mit großer Oberfläche, wie beispielsweise Aktivkohle, Kieselgel und Aluminiumsilikate, aus Gasgemischen in geringer Konzentration enthaltene Gase und Dämpfe anzureichern und damit aus dem Gemisch abzutrennen.

Alle bekannten Adsorptionsverfahren bestehen im wesentlichen aus zwei Arbeitsschritten: der Adsorption und der Desorption. Beide Vorgänge können sowohl diskontinuierlich mit ruhenden Adsorbensschichten, als auch kontinuierlich in Gegenstromverfahren durchgeführt werden. Die Adsorption erfolgt meist bei möglichst niedrigen Temperaturen, da höhere Temperaturen das Aufnahmevermögen des Adsorptionsmittels senken. Die Desorption erfolgt in der Regel bei höheren Temperaturen, bei welchen das beladene Adsorptionsmittel durch Einblasen von Heißdampf thermisch vom aufgenommenen Adsorbat befreit wird.

Zur Trennung von Permanentgasen wurde die Druckwechseladsorption (pressure swing adsorption, PSA) entwickelt. Hierbei wird die Adsorption, insbesondere wiederum an Aktivkohle, aus dem Gemisch bei hohen Drücken von bis zu etwa 10 bar durchgeführt, weil bei solchen höheren Drücken das höher siedende Gas besser adsorbiert wird als das niedriger siedende Gas. Man kann eine scharfe Trennung beispielsweise von Wasserstoff und Kohlenmonoxid, oder auch Wasserstoff und Methan, erhalten. Die Regeneration des Adsorbens, also die Desorption der stärker adsorbierten Gaskomponente, erfolgt durch Entspannung im Gleichstrom und nachfolgende Spülung mit Niederdruck-Reingas. Bei diesem diskontinuierlichen Prozeß muß ein Teil des gewonnenen Reingases für die Regeneration wieder verbraucht werden. Die PSA-Fluidtrennung wird großtechnisch angewandt, ist aber für viele denkbare Anwendungszwecke zu unhandlich und auch nicht wirtschaftlich genug.

Speziell für die Trennung von Sauerstoff und Stickstoff wurde das sogenannte "BF-Verfahren" entwickelt. Hierbei macht man sich den geringen Größenunterschied zwischen Stickstoff und Sauerstoff zunutze, der sich dann auswirkt, wenn eine Adsorption an so engporigen Adsorbentien stattfindet, daß die Porengröße in den Bereich des kritischen Moleküldurchmessers kommt. Dann wirken sich die molekularen Größenunterschiede stark auf die Diffusionsgeschwindigkeit im Adorbens aus. Es ist beispielsweise gefunden worden, daß der geschwindigkeitsbestimmende Schritt bei der Adsorption von Sauerstoff aus einem Sauerstoff/Stickstoffgemisch an Kohlenstoff-Molekularsieben mit Porendurchmessern im Bereich 0,5 bis 0,7 nm die sogenannte Oberflächendiffusion ist, die von der Molekülgröße und insbesondere von der Elektronendichte abhängt. Trotz ähnlicher Gleichgewichtsbeladungen für Stickstoff und Sauerstoff wird Sauerstoff sehr viel schneller adsorbiert. Entsprechend ist ein diskontinuierliches Verfahren vorgeschlagen worden, das dem PSA-Verfahren ähnelt, bei welchem ein mit Aktivkoks beschickter Adsorber kurze Zeit mit Luft unter leichtem Überdruck durchströmt wird. Hierbei wird zunächst der Sauerstoff adsorbiert. Der entsprechend mit Sauerstoff beladene Adsorber wird dann evakuiert, um den Sauerstoff abzuziehen. Verwendet man zwei parallel geschaltete Adsorber, von denen einer jeweils beladen und der andere entladen wird, läßt sich ein quasi-kontinuierliches Verfahren durchführen, das ein Sauerstoff-Reichgas mit etwa 50 bis 55 % Sauerstoff liefert. Führt man einen Teil des desorbierten Reichgases zur Spülung des jeweils parallel laufenden Adsorbers zurück, läßt sich eine Sauerstoffanreicherung auf etwa 80 Vol.-% erreichen.

Das deutsche Patent DE 36 18 426 sowie die EP 606 306 der Bergwerksverband GmbH beschreiben die Herstellung von Kohlenstoffmolekularsieben, wie sie in PSA- bzw. BF-Verfahren zur Stickstoffgewinnung aus Luft eingesetzt werden. Dabei werden in der Regel hochdichte, besonders feinporige Aktivkohlegranulate mit Schüttgewichten von mehr als 500 g/l verwendet.

Eine andere Möglichkeit zur Trennung von Gasen und Gas/Dampfgemischen, sowie zur Anreicherung einzelner Komponenten oder der Abtrennung einzelner Komponenten aus derartigen Gemischen, stellt das auf der Grundoperation der Permeation basierende Membrantrennverfahren dar. Hierbei werden teildurchlässige, selektiv wirkende Membranen zum Trennen von Mehrstoffgas- oder Gas/Dampfgemischen genutzt. Werkstoffe für dafür notwendige Festmembranen umfassen neben maßgeschneiderten, synthetischen Polymeren u.a. auch anorganische Materialien wie poröses Glas oder Glaskeramik, Graphit, Graphitoxid und ähnliche Materialien.

Es ist weiterhin vorgeschlagen worden, Sauerstoff-Reichgase durch Lufttrennung an Membranen zu erhalten; ein Hauptproblem hierbei ist die ungünstige Volumenarbeit im Vergleich zu Flüssigphasenanwendungen.

Die US-Patentschrift 4,349,356 beschreibt ein Verfahren zur Anreicherung einer Komponente aus einem Gasgemisch nach dem Prinzip der Knudsen-Diffusion an porösen Glasmembranen. Hierbei wird das Gasgemisch pulsweise auf die Membran aufgebracht und nach bestimmten Zeitabständen werden die permeierten Gase im Vakuum abgesaugt. Der Anreicherungsfaktor ist dabei sowohl Zeit- und Porengrößen abhängig, wobei die Triebkraft wiederum die Druckdifferenz ist.
Adsorptionsvorgänge spielen beim Verfahren der US-4,349,356 keine Rolle.

Auch Trennverfahren unter Anwendung kombinierter Adsorptions- und Membrantrennmechanismen sind im Stand der Technik bekannt.

Ein kontinuierlich arbeitendes Gastrennverfahren an Membranen ist beispielsweise in der EP 428 052 beschrieben. Darin wird eine semipermeable Kompositmembran verwendet, welche aus einem mit einem porösen Adsorptionsmaterial überzogenen, dünnen porösen Substrat besteht. Das poröse Substrat hat dabei im wesentlichen die Aufgabe, eine mechanische Trägerung und eine definierte Porengröße der darauf abgeschiedenen porösen Membran zu gewährleisten.

Das Gastrennverfahren der EP 428 052 beruht im wesentlichen auf der angelegten Druckdifferenz, also darauf, daß das Fluidgemisch unter hohen Druck auf die Membran gepreßt werden, wobei Teile des Fluidgemisches an der Kompositmembran selektiv adsorbiert werden, durch Oberflächenfluß auf die andere Seite gelangen und dort im Unterdruck abgesaugt werden bzw. durch Entspannung desorbieren. Das Trägersubstrat beeinflußt dabei diese Vorgänge nicht, es ist inert. Wesentlich für die Durchführbarkeit dieses Verfahrens ist die geringe Dicke der Kompositmembran von weniger als 20 µm, da andernfalls die Permeationsgeschwindigkeiten der adsorbierten Komponenten zu gering sind.

Ein wesentlicher Nachteil dieses Verfahrens des Standes der Technik ist, daß die Anreicherung von schwer desorbierbaren Spezies (z.B. Wasser, hochsiedende Verbindungen wie beispielsweise Xylol, Naphthalin, SO₂, H₂SO₄ etc.) die Selektivitäten beträchtlich mindert. So müssen die verwendeten Fluidgemische praktisch wasserfrei sein, da Wasser die Adsorptionsplätze an Kohlenstoffmembranen belegt und so die Selektivität und Permeabilität derartiger Systeme stark herabsetzt. Zur Entfernung von Wasser müßten deutlich höhere und im Verlauf des Prozesses ansteigende Druckgradienten aufgebaut werden, um das adsorbierte Wasser zu entfernen. Hochsieder sind bei Raumtemperatur im Vakuum praktisch nicht zu entfernen und vergiften die Membran sukzessive. Dies schränkt den Anwendungsbereich von Membranen wie jener der EP 428 052 sehr stark ein. So müssen im diskontinuierlichen Verfahren zur Wasserentfernung Unterdrücke bis -50 mbar angelegt werden, was in kontinuierlichen Verfahren aus verfahrenstechnischen Gründen meist nicht möglich ist.

Die Verwendung analoge Kompositmembranen zur Anreicherung von Wasserstoff wird in der EP 582 184 beschrieben. Hier wird das Membrantrennverfahren der EP 428 052 in Kombination mit dem herkömmlichen PSA-Prozeß eingesetzt. Auch hier ergeben sich die obigen Nachteile der Membranvergiftung.

Die US-Patentschrift 5,649,996 beschreibt ein Verfahren zur Trennung von Gasen unter Verwendung von Molekularsiebmembranen (MSM) aus Aktivkohlefasern. Zur Erzielung der notwendigen Selektivität und der höheren Trennschärfe muß hier bei kryogenen Temperaturen von unter -20 °C gearbeitet werden. Jedoch muß bei derartig tiefen Temperaturen zur Desorption des Permeats ein wesentlich größerer Druckgradient an der Membran angelegt werden. Dies schränkt sowohl die Anwendbarkeit, wie auch die Wirtschaftlichkeit dieses Verfahren erheblich ein. Ferner werden auch hier die Gase vorgereinigt, um Wasser, Hochsieder und andere schwer desorbierbare Stoffe von der Membran fernzuhalten.

Die US-Patentschrift 4,685,940 beschreibt die Herstellung und Verwendung von Kohlenstoffmembranen mit definierter Porengröße und -Verteilung. Diese dienen der siebartigen Trennung von Gasgemischen nach dem Moleküldurchmesser. Die Kohlenstoffmembranen werden auf inerten porösen Trägem abgeschieden. Auch hier wird ein Druckgradient durch die Membran aufgebaut. Ferner werden hier nur zweikomponentige Gemische zur Trennung verwendet. Für das Verfahren der vorliegenden Erfindung sind die in den US Patenten 5,649,996 und 4,685,940 beschriebenen Membranen jedenfalls überwiegend nicht geeignet.

Es besteht daher ein erheblicher Bedarf, Membrantrennverfahren zur Verfügung zu stellen, welche die oben beschriebenen Nachteile des Standes der Technik überwinden, insbesondere dahingehend, daß die Selektivität der Membran über einen langen Zeitraum unverändert erhalten bleibt.

Ein erheblicher und immer noch steigender Bedarf an angereicherten und Reingasen macht darüberhinaus die Senkung der Kosten für entsprechende Trennverfahren dringend erforderlich. Druckgradient-Prozesse, insbesondere Druckwechselverfahren sind durch hohe Energiekosten für die Komprimierung und Dekomprimierung von Gasen deshalb besonders nachteilig. Auch die Rückgewinnung von Eduktgasen aus Prozeßgasgemischen industrieller Produktionsanlagen zum Zwecke der Rückführung in den Produktionsprozeß ist sowohl aus ökonomischen, wie auch aus ökologischen Gründen notwendig und wünschenswert, hängt aber im wesentlichen von den Investitions- und Betriebskosten für dafür notwendige Trennverfahren ab. Auch der technisch gleichwertige Fall der gezielten Abreicherung einzelner, beispielsweise schädlicher Komponenten aus einem Gas- oder Gas/Dampfgemisch erfordert möglichst kostengünstige Trennverfahren.

Es besteht daher ein starkes Bedürfnis, ein kostengünstiges Trennverfahren für die An- oder Abreicherung von Gasen aus entsprechenden Gemischen zur Verfügung zu stellen.
Ein derartiges Verfahren sollte im günstigsten Fall die positiven Eigenschaften herkömmlicher Adsorptionstrennverfahren mit den Besonderheiten der Membrantrennverfahren verbinden, also im wesentlichen eine hohe Trennselektivität ermöglichen, ohne die Notwendigkeit einer kostenintensiven räumlich und/oder zeitlich separat durchzuführenden Regeneration der Membran bzw. des Adsorbens.

Vor diesem Hintergrund ist es eine wesentliche Aufgabe der Erfindung, ein Verfahren zur Trennung von Fluidgemischen der im Anspruch 1 genannten Art zur Verfügung zu stellen, das mit unaufwendigen Mitteln eine kontinuierliche oder quasikontinuierliche Prozeßführung zur Gewinnung bzw. Abtrennung wenigstens einer Fluidkomponente schafft.
Das erfindungsgemäße Verfahren soll mit niedrigem Energie- und Konstruktionsaufwand eine hohe Selektivität und Ausbeute der Trennung bzw. Anreicherung ermöglichen.

Eine weitere wesentliche Aufgabe der Erfindung liegt in der Bereitstellung einer Vorrichtung zur Trennung von Fluidgemischen der im Anspruch 13 genannten Art, die es erlaubt, die vorstehend genannten Trennverfahren zu realisieren.

Ferner liegt eine wesentliche Aufgabe der Erfindung in der Schaffung einer solchen Vorrichtung, die bei hohem Wirkungsgrad und entsprechender Dimensionierung eine oder mehrere Komponenten aus Zu- oder Abluft, oder aus Prozeßgasen abzutrennen vermag.

Die Lösung der verfahrensbezogenen Aufgaben liegt in den Merkmalen des Anspruches 1.
Vorteilhafte Ausgestaltungen des erfindungsgemäßen Verfahrens sind in den Verfahrens-unteransprüchen definiert.

Die vorrichtungsbezogenen Aufgaben werden durch die Merkmale des Anspruchs 8 gelöst. Vorteilhafte Ausgestaltungen der erfindungsgemäßen Vorrichtung sind in den Vorrichtungsunteransprüchen definiert.

Das erfindungsgemäße Verfahren zur Trennung eines Fluidgemisches aus mindestens zwei Komponenten umfaßt folgende Schritte:
- Kontaktieren des Fluidgemisches bei einer ersten, niederen Temperatur in einem ersten Arbeitsbereich mit einer Kohlenstoffmembran, die an eine Oberfläche einer porösen Transportmatrix angrenzt (und vorzugsweise auf diese aufgebracht ist), wobei Adsorption mindestens einer Fluidkomponente erfolgt und wenigstens eine adsorbierte Komponente des Fluidgemisches bevorzugt durch die Membran permeiert; und zur gleichen Zeit
- Erwärmen einer von der Membran räumlich entfernt liegenden Oberfläche und/oder eines Teils der porösen Transportmatrix auf eine zweite, höhere Temperatur, welche die thermische Desorption adsorbierter Komponenten in einen zweiten Arbeitsbereich ermöglicht, wodurch ein Konzentrationsgradient bezüglich der wenigstens einen permeierten Komponente von der Membranoberfläche durch die Transportmatrix zum zweiten Arbeitsbereich hin erzeugt wird;
- Getrenntes Abführen des an der wenigstens einen permeierten Komponente abgereicherten Fluidgemisches aus dem ersten Arbeitsbereich und des an der wenigstens einen permeierten Komponente angereicherten Fluidgemisches aus dem zweiten Arbeitsbereich.

Die erfindungsgemäße Vorrichtung zur Durchführung des Verfahrens umfaßt eine Kohlenstoffmembran angrenzend an einer Oberfläche einer porösen Transportmatrix, wobei die Membran an einen ersten Arbeitsbereich der Matrix angrenzt und eine räumlich von der Membran entfernt liegende weitere Oberfläche der Transportmatrix an einen zweiten Arbeitsbereich angrenzt, sowie Einrichtungen zum Erwärmen der Oberfläche und/oder eines Teils der Transportmatrix, welcher an dem zweiten Arbeitsbereich anliegt.

Die Transportmatrix für das erfindungsgemäße Verfahren bzw. die Vorrichtung besteht aus porösem Material, welches ähnliche Adsorptionseigenschaften wie Aktivkohle aufweist, üblicherweise poröses Aktivkohlematerial selbst. Dieses kann beliebiger Form, beispielsweise in Form von Platten und/oder Rohren, oder auch Schüttgut verwendet werden. Besonders bevorzugt wird die Verwendung von durch Extrusion hergestellten Formkörpern. Deren Herstellung ist seit langem im Stand der Technik bekannt (siehe hierzu z.B. Fuel 1881, Vol. 60, S. 817ff, DE 21 19 829, DE 36 18 426). Üblicherweise erfolgt die Herstellung von Aktivkohle-Formteilen danach durch Verpressen von Kohle/Binder-Gemischen, anschließendes Sintern und Dampfaktivierung.

Besonders bevorzugt ist als Transportmatrixmaterial gesinterte Aktivkohle mit einer Dichte von 0,2 - 1,8 g/l, vorzugsweise 0,6 - 1,2 g/l, und einer BET-Oberfläche von größer als 200 m²/g, vorzugsweise größer als 500 m²/g, mehr bevorzugt größer als 800 m²/g, besonders bevorzugt größer als 1000 m²/g und insbesondere bevorzugt von größer als 1200 m²/g. Derartige gesinterte Aktivkohlematerialien ermöglichen eine hohe Oberflächenmobilität der adsorbierten Komponenten. Weiterhin ist derartiges Aktivkohlematerial konstruktiv besonders geeignet für die Anbringung von desorptionsseitigen Bohrungen zur Einbringung beispielsweise elektrischer Heizleiter.

Als Material fiir die Transportmatrix können jedoch möglicherweise auch eine Vielzahl anderer poröser Adsorbentien verwendet werden, wie etwa Aluminosilikate, Zeolithe, Kieselgele, Silikate aller Art, etc., sofern sie den Transport der permeierten Komponenten durch den im wesentlichen gleichen molekularen Bewegungsmechanismus gewährleisten, insbesondere durch Oberflächenfluß.

Zur Erzeugung von Kanälen zum Abführen des Permeats/Desorbats innerhalb der Transportmatrix können vor dem Verpressen des Kohle/Binder-Gemisches niedrigschmelzende Stoffe, beispielsweise Metalle, eingelagert werden, welche beim Sintern schmelzen, herauslaufen, und so die entsprechenden Hohlräume erzeugen.

Die erfindungsgemäß verwendbare Transportmatrix muß mit einer Aktivkohlemembran verbunden, vorzugsweise selbst an einer Oberfläche membranisiert werden. Auch hierzu sind im Stand der Technik seit langem viele Verfahren bekannt.

In den meisten Fällen werden zur Erzeugung von Kohlenstoffmembranen sogenannte CVD-Verfahren angewandt. Hierzu wird der Träger, im Falle der vorliegenden Erfindung die Transportmatrix, mit Kohlenwasserstoff-abspaltenden Verbindungen bei hohen Temperaturen behandelt (vgl. G. Savage, Carbon-Carbon Composites, Chapman and Hall, London, 1993, S. 85 ff, US 3,960,769, US 3,979,330). Als Kohlenwasserstoff-abspaltende Verbindungen kommen nahezu alle bekannten gesättigten und ungesättigten Kohlenwasserstoffe mit ausreichender Flüchtigkeit in Frage. Beispiele hierfür sind Methan, Ethan, Ethylen, Acetylen, lineare und verzweigte Alkane, Alkene und Alkine mit Kohlenstoffzahlen von C₁₋₂₀, aromatische Kohlenwasserstoffe wie Benzol, Naphthalin etc. ein und mehrfach alkyl-, alkenylund alkinylsubstituierte Aromaten wie z.B. Toluol, Xylol, Cresol, Styrol etc. und dergleichen. Diese werden in CVD und CVI-Verfahren zumeist in geringer Konzentration in einem Inertgas wie z. B. N₂, Argon oder dergleichen verwendet. Auch der Zusatz von Wasserstoff zu entsprechenden Abscheidegasgemischen ist möglich.

Zur gleichmäßigeren Verteilung der abgeschiedenen Aktivkohlemembran auf der Matrix wird das in der Literatur beschriebene und dem Fachmann wohlbekannte sogenannte CVI-Verfahren (Chemical Vapour Infiltration, siehe z. B. auch W. Benzinger et al., Carbon 1996, 34, S. 1465) standardmäßig angewandt, wobei während der Abscheidung der Membran die Zersetzungsgase mittels eines kontinuierlichen Vakuums an die Oberfläche der Transportmatrix gesaugt werden ("forced flow CVI"). Auf diese Weise wird ein im wesentlichen homogenes Porengefüge in der Aktivkohlemembran erhalten. Diese Homogenisierung des Porengefüges mittels forced flow CVI erhöht zudem die mechanische Festigkeit der Membran. Optional kann nach der CVI-Membranisierung ein weiterer Sinterungsschritt bei Temperaturen von bis zu 1200 °C durchgeführt werden, um die Homogenisierung und Festigkeit weiter zu stabilisieren.

Auch kann bei zu geringer Permeabilität der resultierenden Membran das Porensystem nachträglich erweitert werden, indem man die Membran kurzzeitig mit einem Oxidationsmittel, z.B. HNO₃, benetzt, und anschließend thermisch nachbehandelt.

In der vorliegenden Erfindung wird ein aufzutrennendes Fluidgemisch in einem ersten Arbeitsbereich bei einer ersten, niederen Temperatur mit der Aktivkohlemembran in Kontakt gebracht. Aufgrund der molekularkinetischen und thermodynamischen Eigenschaften der Membranoberfläche wird dabei mindestens eine Komponente an der Membran bevorzugt adsorbiert, das heißt mit höherer Selektivität als andere Fluid-komponenten. Je nach Art der zu adsorbierenden Komponente kann die Selektivität der Adsorption durch geeignete Druck- und Temperaturbedingungen erhöht werden. Niedrige Temperaturen auf der Membranoberfläche sind dabei zu bevorzugen, bevorzugt sind Temperaturen von minus 20 °C bis zu etwa 100 °C, besonders bevorzugt ist Raumtemperatur.

Im Sinne eines thermodynamisch getriebenen Konzentrationsausgleichs beginnen dann die adsorbierten Moleküle mit steigender Belegung der Oberfläche durch Platzwechselvorgänge in Richtung der geringeren Belegungsdichte zu wandern, wobei sie teilweise an der Oberfläche der Membran in die Porenkanäle wandern, und die Membran auf diese Weise durchqueren.

Mindestens eine der adsorbierten Komponenten wird dabei im Regelfall eine gegenüber den anderen Adsorbaten höhere Mobilität aufweisen und bevorzugt durch die Membran in die Transportmatrix permeieren. Diese Fähigkeit zur bevorzugten Permeation bestimmt im wesentlichen die Selektivität der Trennung an der Membran.

Die Platzwechselvorgänge an Adsorptionsstellen werden im allgemeinen als Oberflächenfluß bezeichnet. Hinter der Membran verteilen sich die permeierten Komponenten auf den Adsorptionsplätzen des Porensystems der Transportmatrix. Solange hier freie Adsorptionsplätze vorhanden sind, werden diese von nachrückenden Molekülen belegt, wodurch auf der Membran stets neue Adsorptionsplätze frei werden, die sofort wieder von Molekülen aus dem Fluidgemisch besetzt werden. Dieser thermodynamisch getriebene Konzentrationsausgleich findet erst dann ein Ende, wenn sich ein Konzentrationsgleichgewicht eingestellt hat, d. h. wenn alle Adsorptionsstellen auf der Membran und in der Transportmatrix besetzt sind.

Die Transportmatrix erfüllt also eine mehrfache Funktion: Zum einen fördert sie den Stofftransport permeierter Spezies durch die Membran hindurch, ohne daß auf der Rückseite der Membran eine sofortige Desorption der Komponenten erfolgen muß, indem sie durch Gewährleistung einer ununterbrochenen Kette von Adsorptionsstellen den Oberflächenfluß auch hinter der Membran aufrechterhält. Zum anderen wirkt sie durch die große Vielzahl an Adsorptionsstellen als eine Art Reservoir oder Zwischenspeicher für adsorbierte Komponenten.

Die Transportmatrix verbindet den an der Membran angrenzenden ersten Arbeitsbereich mit einem zweiten Arbeitsbereich, der in einer räumlichen Entfernung von der Membran an der Transportmatrix liegt. Dies kann beispielsweise die der Membranseite gegenüberliegende äußere Oberfläche, oder auch ein Hohlraumkanal, eine Bohrung oder dergleichen in der Transportmatrix sein. Zur Desorption der adsorbierten Komponenten in den zweiten Arbeitsbereich ist es erfindungsgemäß vorgesehen, die Grenzfläche zwischen der Transportmatrix und dem zweiten Arbeitsbereich und/oder einen Teil der an den zweiten Arbeitsbereich angrenzenden Transportmatrix zu erwärmen, um auf diese Weise die zur Desorption der Sorbate notwendige Energie zur Verfügung zu stellen.

Die thermische Energie kann auf alle erdenklichen Arten zur Verfügung gestellt werden, beispielsweise durch Beheizung mit elektrischen Heizleitern, Induktionsheizung, Heizstrahlröhren, Röhrenlampen, Infrarotbestrahlung, Mikrowellenbestrahlung, über- oder partielles Durchleiten eines erwärmten Gas- oder Fluidstroms über/durch die Transportmatrix und ähnliche dem Fachmann bekannte Maßnahmen. Auch mit katalytisch wirksamen Material ummantelte Heizleiter können verwendet werden, womit in bestimmten Anwendungen beispielsweise adsorbierte flüchtige organische Verbindungen bei der Desorption katalytisch oxidiert werden. Besonders bevorzugt ist die direkte Beheizung eines Teils der Transportmatrix durch Anbringen oder Einbau von Elektroden, sofern die Transportmatrix aus einem elektrisch leitfähigen Material besteht. Besonders vorteilhaft ist die direkte elektrische Beheizung über eingebaute Elektroden bei einer Aktivkohlematrix. Aktivkohle weist einen stark temperaturabhängigen (negativen) elektrischen Wärmeleitfähigkeitskoeffizienten auf, wodurch in der Transportmatrix eine Art elektrischer Kanalbildung auftritt, mit deren Hilfe sich die Transportmatrix lokal begrenzt besonders effektiv erwärmen läßt, wobei die Membranschicht im wesentlichen nicht erwärmt wird.

Die zum Zwecke der Desorption angelegte Temperatur liegt je nach Art der zu desorbierenden Komponenten, zwischen 30 und 300 °C, bevorzugt zwischen 50 und 150 °C. Bei starker Belegung der Transportmatrix mit hochsiedenden Stoffen kann in Einzelfällen (nichtoxidative Bedingungen) auch auf höhere Temperaturen aufgeheizt werden, bis zu 500 °C oder mehr.

Die thermische Desorption adsorbierter Komponenten aus der Transportmatrix in den zweiten Arbeitsbereich führt zum Freiwerden neuer Adsorptionsplätze in der Transportmatrix, wodurch das Konzentrationsgleichgewicht gestört und der Oberflächenfluß der Sorbate von der Membran in die Transportmatrix im Wege des Konzentrationsausgleichs wieder angeregt wird. Auf diese Weise kann durch diskontinuierliche oder kontinuierliche Erwärmung auf der einen Seite der Transportmatrix ein quasi-kontinuierlicher Oberflächenstrom adsorbierter Komponenten vom ersten in den zweiten Arbeitsbereich erzeugt werden, welcher zu einer Abreicherung der adsorbierenden Komponenten aus dem Fluidgemisch im ersten Arbeitsbereich führt, sowie zu einer entsprechenden Anreicherung dieser Komponenten im zweiten Arbeitsbereich.

Dabei ist zu berücksichtigen, daß die Oberflächenflußvorgänge neben normalen Diffusionsvorgängen bzw. parallel dazu an der Membran und in der Transportmatrix ablaufen. Die Porengröße der Membran ist also für den Trenneffekt nicht ausschlaggebend. Die Porengrößen der Membran werden zwischen 0,4 and 5 nm (4 und 50 Å) im Durchmesser liegen, vorzugsweise zwischen 0,4 and 1 nm (4 und 10 Å), die der Transportmatrix bei bis zu 10 µm. Der Moleküldurchmesser adsorbierter Komponenten ist meist deutlich kleiner, eine Trennung nach Art eines Molsiebes liegt also nicht vor.

Vielmehr treten im Rahmen von Diffusions- und Strömungsvorgängen in der Regel nahezu alle Spezies des Fluidgemisches durch die Membran hindurch, der Stofftransport durch Oberflächenfluß adsorbierter Komponenten ist jedoch um ein vielfaches schneller, so daß der Trenneffekt der erfindungsgemäßen Vorrichtung bzw. des Verfahrens gemäß der vorliegenden Erfindung im wesentlichen auf kinetischen Effekten beruht.

Der wesentliche Vorteil der Erfindung liegt in der Verwendung der thermischen Desorption, die aufgrund der besseren Energiebilanz nicht nur energetisch günstiger als Druckdesorption ist, sondern auch die Entfernung von mittels Druck schwer desorbierbarer Stoffe, wie z. B. Wasser, Hochsieder, Säuren etc., auf einfache Art erlaubt. Somit ist die Lebensdauer und Selektivität erfindungsgemäßer Vorrichtungen deutlich höher als die der aus dem Stand der Technik bekannten Druckdesorptionsvorrichtungen.

In vorteilhafter Weise läßt sich im erfindungsgemäßen Verfahren und der Vorrichtung die Thermodesorption mit Druckdesorption kombinieren und/oder ergänzen. Hierzu muß gegebenenfalls im zweiten Arbeitsbereich zusätzlich ein Unterdruck appliziert werden.

Auch kann das Fluidgemisch pulsweise oder im Wechsel von Über- und Unterdruck in den ersten Arbeitsbereich eingegeben werden, um nicht permeierende Komponenten wieder von der Membran bzw. schneller aus den Poren und dem Bereich vor der Membran, an der die Trennung erfolgt zu entfernen.

Die Abführung von an den bevorzugt adsorbierten Komponenten abgereicherten Fluidgemischen aus dem ersten Arbeitsbereich nach einer gewissen Kontaktzeit und der entsprechend angereicherten Fluide muß auf voneinander getrennten Wegen erfolgen. Zur weiteren Erhöhung des An- bzw. Abreicherungsgrades können die Fluidgemische in Kontakt mit weiteren erfindungsgemäßen Vorrichtungen gebracht werden, im Sinne einer Reihenschaltung der Membranen. Hierbei kann z.B. aus dem ersten Arbeitsbereich gewonnenes Fluidgemisch als Kreislaufgas zur Abführung des abgereicherten Fluidgemisches im ersten Arbeitsbereich einer nachgeschalteten und/oder parallel geschalteten Membran verwendet werden, indem es beispielsweise im Kreislauf geführt wird. Ebenso kann das aus dem zweiten Arbeitsbereich gewonnene Fluidgemisch zur Abführung desorbierter Komponenten aus dem zweiten Arbeitsbereich einer nachgeschalteten und/oder parallel geschalteten Membranvorrichtung verwendet werden. Auch und besonders bevorzugt die parallele Stromführung auf eine Vielzahl von erfindungsgemäßen Membran/Transportmatrix-Vorrichtungen ist erfindungsgemäß vorgesehen.

Selbstverständlich ist das erfindungsgemäße Verfahren und/oder die Vorrichtung sowohl zur Gewinnung eines an mindestens einer Komponente abgereicherten Gases aus dem ersten Arbeitsbereich verwendbar, wie auch zur Gewinnung von angereicherten Fluidgemischen aus dem zweiten Arbeitsbereich. Je nach Trennaufgabe und Eigenschaften der Fluidkomponenten wie auch der Membran wird der Fachmann auswählen, wo das für ihn interessantere Fluidgemisch auftritt.

Die Abführung der mit desorbierten Komponenten angereicherten Fluidmischung aus dem zweiten Arbeitsbereich kann durch Anlegen eines Unterdruckes mittels Absaugen geschehen, oder auch mittels Durchströmung des zweiten Arbeitsbereiches mit einem Trägergas, welches die desorbierten Komponenten mitreißt.

Das Verfahren und die Vorrichtung der vorliegenden Erfindung kann für eine Vielzahl von Trennaufgaben angewendet werden, etwa die Trennung von Permanentgasen, wie zum Beispiel die Trennung von Luft in N₂ und O₂, die Anreicherung von O₂ aus Luft, die Anreicherung oder Abtrennung von Wasserstoff aus industriellen Prozeßgasen, die Anreicherung oder Abtrennung von D₂ aus H₂/D₂-Gemischen, die Abtrennung von flüchtigen Kohlenwasserstoffen aus Zu- oder Abluft (Luftreinigung), und dergleichen. Ebenso ist die Trocknung von Gasen und/oder gasgemischen erfindungsgemäß möglich. Die Thermodesorption erlaubt dabei eine nahezu quantitative Abtrennung von Wasser auf sehr einfache Weise.
Auch die Trennung von Gas/Dampf-Gemischen oder Flüssigmischungen ist mittels der Erfindung möglich.
Ferner kann die Erfindung zur Trennung von Edelgasen, zur Isotopentrennung von fluiden Isotopen enthaltenden Mischungen, zur Isomerentrennung, zur Trocknung von Druckluft, sowie zur Gewinnung und/oder Anreicherung von N₂ genutzt werden. Auch die Verwendung der Erfindung als Vorstufe in Verbindung mit einem herkömmlichen Druckwechsel-Adsorptionsverfahren, beispielsweise an Zeolithen, zur Sauerstoffgewinnung ist erfindungsgemäß vorgesehen.

Die Dimensionierung erfindungsgemäßer Vorrichtungen kann je nach Anwendungszweck in weiten Grenzen variiert werden. Für die Verwendung als Raumluftfilter z.B. in Kraftfahrzeugen sind kleine kompakte Module mit Autobatterie-Niederspannungsheizung denkbar, zur Trennung von Luft in seine Hauptbestandteile sind entsprechend große technische Anlagen nötig.

Wesentliche Vorteile eines erfindungsgemäßen Verfahrens bzw. einer dementsprechenden Vorrichtung gegenüber dem bekannten Stand der Technik liegen vor allem im geringen konstruktiven Aufwand, da in der möglichen kompakten Bauweise weder beweglichen Teile vorliegen, noch separate Regenerations- bzw. Desorptionseinrichtungen vorgesehen werden müssen. Vorteilhaft ist weiterhin die hohe, konstruktionsbedingte mechanische Stabilität, welche die Desorption auch thermisch instabiler Spezies im Vakuum ermöglicht. Auch können sehr hohe Desorptionstemperaturen erzielt werden, ohne daß Spezialwerkstoffe oder aufwendige Isolierungen erforderlich sind.

Die vorliegende Erfindung soll anhand des folgenden Vorrichtungsbeispieles näher erläutert werden.

### Beschreibung der Figuren:

- Figur 1: zeigt das Profil einer erfindungsgemäßen Transportmatrix mit einer Lamellenstruktur.
- Figur 2: zeigt eine perspektivische Ansicht der Transportmatrix aus Figur 1.

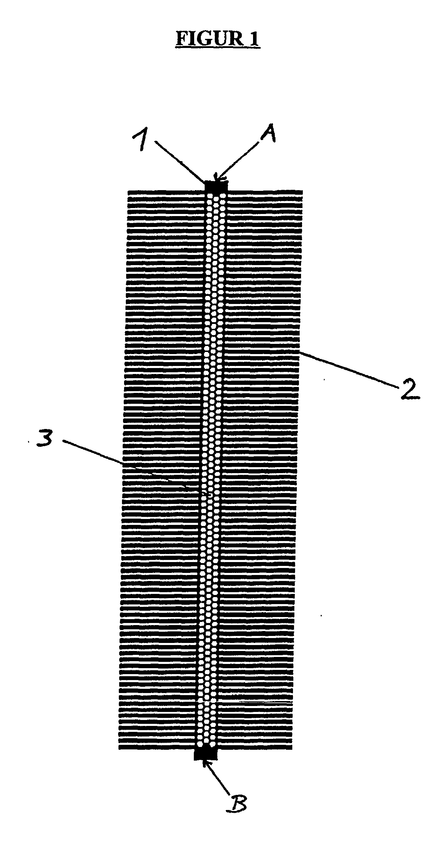

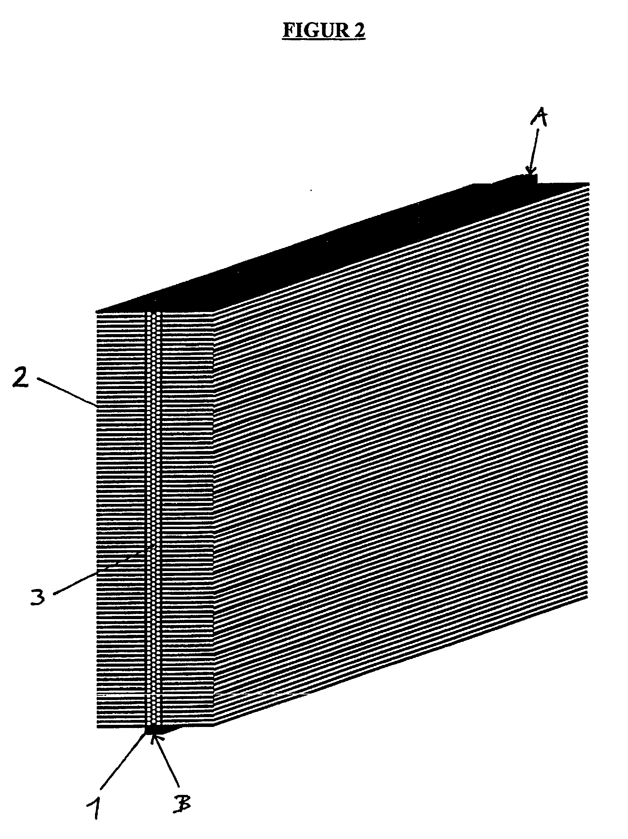

Figur 1 und 2 zeigen eine Transportmatrix, bestehend aus einer zentralen Platte 1, an der beidseitig zueinander parallel angeordnete Lamellenflächen 2 senkrecht zur Abbildungsebene angebracht sind. Die Hauptebene der Lamellenflächen steht dabei senkrecht zur Ebene der zentralen Platte 1. In die zentralen Platte 1 sind durchlaufende Kanäle 3 vorgesehen, die den zweiten Arbeitsbereich der Vorrichtung bilden. Die Lamellenflächen 2 sind oberflächlich membranisiert. Diese membranisierte Oberfläche grenzt an den ersten Arbeitsbereich an, der die Platte 1 außen umgibt.

Werden nun an der zentralen Platte 1 beispielsweise an zwei gegenüberliegenden Seiten (A, B) Elektroden angebracht und unter elektrische Spannung gesetzt, fließt der elektrische Strom auf kürzestem Weg durch die zentrale Platte 1 und erwärmt im wesentlichen nur den zweiten Arbeitsbereich der Platte. Hierdurch wird die Erwärmung der Lamellen und damit auch der Membran weitgehend vermieden.

Das Fluidgemisch wird von beiden Seiten auf die membranisierten Lamellenflächen geführt, wobei die permeierenden Komponenten nach thermischer Desorption aus den Kanälen 3 der zentralen Platte 1 anschließend abgeführt werden können.

In einer weiteren bevorzugten Ausführungsform der erfindungsgemäßen Vorrichtung sind die Kanäle 3 der zentralen Platte 1 einseitig verschlossen, wobei an deren anderen Ende ein Absaugstutzen aus elektrisch nicht leitfähigem Material angebracht sein kann.

## Patentansprüche

1. Verfahren zur Trennung eines Fluidgemisches aus mindestens zwei Komponenten, folgende Schritte umfassend:
- Kontaktieren des Fluidgemisches bei einer ersten, niederen Temperatur in einem ersten Arbeitsbereich mit einer Kohlenstoffmembran, die an eine Oberfläche einer porösen Transportmatrix (1,2) angrenzend vorgesehen bzw. auf einer Oberfläche der Matrix (1,2) aufgebracht ist, wobei Adsorption mindestens einer Fluidkomponente erfolgt und wenigstens eine adsorbierte Komponente des Fluidgemisches bevorzugt durch die Membran permeiert; und zur gleichen Zeit
- Erwärmen einer von der Membran räumlich entfernt liegenden Oberfläche und/oder eines Teils der porösen Transportmatrix auf eine zweite, höhere Temperatur, welche die thermische Desorption adsorbierter Komponenten in einen zweiten Arbeitsbereich ermöglicht, wodurch ein Konzentrationsgradient bezüglich der wenigstens einen permeierten Komponente von der Membranoberfläche durch die Transportmatrix zum zweiten Arbeitsbereich hin erzeugt wird;
- Getrenntes Abführen des an der wenigstens einen permeierten Komponente abgereicherten Fluidgemisches aus dem ersten Arbeitsbereich und des an der wenigstens einen permeierten Komponente angereicherten Fluidgemisches aus dem zweiten Arbeitsbereich.

2. Verfahren nach Anspruch 1,
**dadurch gekennzeichnet, daß** die Kohlenstoffmembran die Permeation der wenigstens einen adsorbierten Komponente und die Transportmatrix den Transport der permeierten Komponente im wesentlichen durch den gleichen molekularen Bewegungsmechanismus ermöglichen.

3. Verfahren nach einem der vorhergehenden Ansprüche,
**dadurch gekennzeichnet, daß** Permeation und Transport der wenigstens einen permeierten Komponente im wesentlichen durch Oberflächenfluß adsorbierter Spezies erfolgt.

4. Verfahren nach einem der vorhergehenden Ansprüche,
**dadurch gekennzeichnet, daß** die Erwärmung mittels eines elektrischen Heizleiters (A,B) erfolgt.

5. Verfahren nach einem der vorhergehenden Ansprüche,
**dadurch gekennzeichnet, daß** die Erwärmung durch direkte elektrische Heizung eines Teils der Transportmatrix erfolgt.

6. Verfahren nach einem der vorhergehenden Ansprüche,
**dadurch gekennzeichnet, daß** die Erwärmung kontinuierlich oder diskontinuierlich erfolgt.

7. Verfahren nach einem der vorhergehenden Ansprüche,
**dadurch gekennzeichnet, daß** das mit der wenigstens einen bevorzugt permeierten Komponente angereicherte Fluidgemisch kontinuierlich oder diskontinuierlich aus dem zweiten Arbeitsbereich abgeführt wird, gegebenenfalls durch Anlegen eines Druckgradienten.

8. Verfahren nach einem der vorhergehenden Ansprüche,
**dadurch gekennzeichnet, daß** die Verfahrensschritte des Anspruchs 1 mehrfach nacheinander an mehreren hintereinander geschalteten Membran/Transportmatrix-Baugruppen ausgeführt werden.

9. Verfahren nach einem der vorhergehenden Ansprüche,
**dadurch gekennzeichnet, daß** das aus dem ersten Arbeitsbereich gewonnene Fluidgemisch als Kreislaufgas zur weiteren Abreicherung und/oder zur Abführung des abgereicherten Fluidgemisches im ersten Arbeitsbereich eines nachgeschalteten Verfahrens verwendet wird.

10. Verfahren nach einem der vorhergehenden Ansprüche,
**dadurch gekennzeichnet, daß** das im zweiten Arbeitsbereich gewonnene Fluidgemisch als Kreislaufgas zur weiteren Anreicherung und/oder zur Abführung desorbierter Komponenten im zweiten Arbeitsbereich eines nachgeschalteten Verfahrens verwendet wird.

11. Verfahren nach einem der vorhergehenden Ansprüche,
**dadurch gekennzeichnet, daß** das an permeierenden Komponenten abgereicherte Fluidgemisch aus dem ersten Arbeitsbereich gewonnen wird.

12. Verfahren nach einem der vorhergehenden Ansprüche,
**dadurch gekennzeichnet, daß** das an permeierenden Komponenten angereicherte Fluidgemisch aus dem zweiten Arbeitsbereich gewonnen wird.

13. Vorrichtung zur Durchführung des Verfahrens gemäß Anspruch 1 umfassend eine Kohlenstoffmembran angrenzend an bzw. aufgebracht auf einer Oberfläche einer porösen Transportmatrix (1,2), wobei die Membran an einen ersten Arbeitsbereich angrenzt und eine räumlich von der Membran entfernt liegende weitere Oberfläche der Transportmatrix an einen zweiten Arbeitsbereich angrenzt, sowie Einrichtungen (A,B) zum Erwärmen der Oberfläche und/oder eines Teils der Transportmatrix, welcher an dem zweiten Arbeitsbereich anliegt.

14. Vorrichtung nach Anspruch 13,
**dadurch gekennzeichnet, daß** die Transportmatrix (1,2) platten- oder rohrförmig ausgebildet ist.

15. Vorrichtung nach einem der Ansprüche 13-14,
**dadurch gekennzeichnet, daß** die Transportmatrix (1,2) Aktivkohle umfaßt, insbesondere gesinterte Aktivkohle mit einer BET-Oberfläche von größer als 200 m²/g, vorzugsweise größer als 500 m²/g, bevorzugt größer als 800 m²/g, besonders bevorzugt größer als 1000 m²/g und insbesondere bevorzugt von größer als 1200 m²/g.

16. Vorrichtung nach einem der Ansprüche 13-15,
**dadurch gekennzeichnet, daß** die Einrichtungen (A,B) zur Erwärmung der Desorptionsseite der Transportmatrix eine Heizstrahlröhre, eine Röhrenlampe, einen elektrischen Heizleiter, eine Induktionsheizung, die gegebenenfalls in einen Teil der Transportmatrix eingearbeitet sein können, oder die direkte elektrische Beheizung eines elektrisch leitfähigen Teils der Transportmatrix umfassen.

17. Vorrichtung nach einem der Ansprüche 13-16,
**dadurch gekennzeichnet, daß** im ersten Arbeitsbereich Vorrichtungen zur Zu- und Abführung von Fluidgemisch, und im zweiten Arbeitsbereich Vorrichtungen (3) zum Abführen von an wenigstens einer Komponente angereichertem Fluidgemisch vorgesehen sind.

18. Vorrichtung zur Trennung eines Fluidgemisches,
**dadurch gekennzeichnet, daß** mehrere Vorrichtungen nach einem der Ansprüche 13-17 in Reihe betrieben werden.

19. Vorrichtung nach einem der Ansprüche 13-18,
**dadurch gekennzeichnet, daß** im ersten Arbeitsbereich Luft mit der Membranoberfläche kontaktiert wird und im zweiten Arbeitsbereich sauerstoffangereicherte Luft gewonnen wird.

20. Vorrichtung nach einem der Ansprüche 13-19,
**dadurch gekennzeichnet, daß** der zweite Arbeitsbereich von Kanälen (3) in einer plattenförmigen Transportmatrix (1) gebildet wird, die beidseitig senkrecht zur Plattenebene parallel angeordnete Lamellenflächen (2) aufweist, auf welchen die Kohlenstoffmembran aufgebracht ist.

21. Vorrichtung nach Anspruch 20,
**dadurch gekennzeichnet, daß** der Stromfluß einer direkten elektrischen Beheizung (A,B) entlang der Transportmatrix-Plattenflächen (1) senkrecht zur Hauptebene der Lamellen (2) geführt wird.

22. Verwendung des Verfahrens und/oder der Vorrichtung nach einem der vorhergehenden Ansprüche zur Reinigung von verunreinigter Zu- oder Abluft, insbesondere für Innenräume von Kraftfahrzeugen und dergleichen.

23. Verwendung des Verfahrens und/oder der Vorrichtung nach einem der vorhergehenden Ansprüche zur Anreicherung einer Komponente aus Prozeßgasen.

24. Verwendung des Verfahrens und/oder der Vorrichtung nach einem der vorhergehenden Ansprüche zur Anreicherung von Wasserstoff aus Fluidgemischen.

25. Verwendung des Verfahrens und/oder der Vorrichtung nach einem der vorhergehenden Ansprüche zur Trennung von Luft und/oder zur Anreicherung von Sauerstoff aus Luft.

26. Verwendung des Verfahrens und/oder der Vorrichtung nach einem der vorhergehenden Ansprüche zur Trocknung von Gasen und/oder Gasgemischen.

27. Verwendung des Verfahrens und/oder der Vorrichtung nach einem der vorhergehenden Ansprüche zur Trennung von Edelgasen.

28. Verwendung des Verfahrens und/oder der Vorrichtung nach einem der vorhergehenden Ansprüche zur Isotopentrennung fluider Isotope enthaltender Mischungen.

29. Verwendung des Verfahrens und/oder der Vorrichtung nach einem der vorhergehenden Ansprüche als Voranreicherungsstufe in Verbindung mit einem Druckwechseladsorber zur Sauerstoffgewinnung.

## Claims

1. Process to separate a fluid mixture consisting of at least two components which is comprised of the following steps:
- contacting of the fluid mixture at a first, lower temperature in a first operating zone with a carbon membrane which is located adjacent to a surface of a porous transport (1,2) matrix or applied to a surface of the matrix (1,2) in which case at least one fluid component is adsorbed and at least one adsorbed component of the fluid mixture preferably permeates through the membrane; and at the same time
- heating of a surface spatially distant from the membrane and/or a part of the porous transport matrix to a second, higher temperature which facilitates the thermal desorption of adsorbed components into a second operating zone, producing a concentration gradient with respect to the at least one permeated component from the membrane surface through the transport matrix to the second operating zone;
- separate removal of the fluid mixture depleted of the at least one permeated component from the first operating zone and of the fluid mixture enriched by the at least one permeated component from the second operating zone.

2. Process in accordance with claim 1,
**characterized by** the carbon membrane facilitating the permeation of the at least one adsorbed component and the transport matrix the transport of the permeated component essentially by means of the same molecular movement mechanism.

3. Process in accordance with one of the preceding claims,
**characterized by** the permeation and transport of the at least one of the permeated components essentially by means of surface flow of the adsorbed species.

4. Process in accordance with one of the preceding claims
**characterized by** the heating being carried out by means of an electrical heating conductor (A, B).

5. Process in accordance with one of the preceding claims,
**characterized by** the heating of a part of the transport matrix by direct electrical heating.

6. Process in accordance with one of the preceding claims,
**characterized by** continuous or discontinuous heating.

7. Process in accordance with one of the preceding claims,
**characterized by** the fluid mixture enriched with the at least one of the preferably permeated components being removed continuously or discontinuously from the second operating zone, if necessary through the application of a pressure gradient.

8. Process in accordance with one of the preceding claims,
**characterized by the** the process steps of claim 1 being carried out several times one after the other on several membrane/transport matrix structural assemblies connected in series behind one another.

9. Process in accordance with one of the preceding claims,
**characterized by** the fluid mixture extracted from the first operating zone being used as circulation gas for the further depletion and/or removal of the depleted fluid mixture in the first operating zone of a process connected downstream.

10. Process in accordance with one of the preceding claims,
**characterized by** the fluid mixture extracted in the second operating zone being used as circulation gas for the further concentration and/or removal of desorbed components in the second operating zone of a process connected downstream.

11. Process in accordance with one of the preceding claims,
**characterized by** the fluid mixture depleted of permeated components being extracted from the first operating zone.

12. Process in accordance with one of the preceding claims,
**characterized by** the fluid mixture enriched with permeated components being extracted from the second operating zone.

13. Device to carry out the process according to claim 1, comprising a carbon membrane adjacent to or applied to a surface of a porous transport matrix, the membrane being adjacent to a first operating zone and another surface of the transport matrix (1, 2), which surface is spatially removed from the membrane, being arranged adjacent to a second operating zone as well as devices (A, B) to heat the surface and/or a part of the transport matrix which is adjacent to the second operating zone.

14. Device in accordance with claim 13,
**characterized by** the transport matrix (1, 2) being designed in the form of plates or pipes.

15. Device in accordance with one of claims 13-14,
**characterized by** the transport matrix (1, 2) being made of activated charcoal, in particular sintered activated charcoal with a BET surface greater than 200 m²/g, preferably greater than 500 m²/g, more preferably greater than 800 m²/g, especially preferably greater than 1000 m²/g, and most preferably greater than 1200 m²/g.

16. Device in accordance with one of claims 13-15,
**characterized by the** facilities (A, B) to heat the desorption side of the transport matrix being comprised of radiant heating pipes, a tubular lamp, an electrical heating conductor, an induction heating device, which can be installed in part of the transport matrix, or of direct electrical heating of an electrically conductive part of the transport matrix.

17. Device in accordance with one of claims 13-16,
**characterized by** devices for the supplying and removal of a fluid mixture being provided in a first operating zone and devices (3) for the removal of a fluid mixture enriched with at least one component in a second operating zone.

18. Device to separate a fluid mixture,
**characterized by** several devices in accordance with one of claims 13-17 being operated in series.

19. Device in accordance with one of claims 13-18,
**characterized by** air being brought into contact with the membrane surface in the first operating zone and oxygen-enriched air being extracted in the second operating zone.

20. Device in accordance with one of claims 13-19,
**characterized by** the second operating zone being in the form of channels (3) in a plate-shaped transport matrix (1) which has lamellar surfaces (2), both sides of which are arranged in parallel vertical to the plane of the plates, to which the carbon membrane is applied.

21. Device in accordance with claim 20,
**characterized by** the current from a direct electrical heating device (A, B) being conducted along the surfaces of the transport matrix plates (1) vertically to the main plane of the lamellae (2).

22. Use of the process and/or of the device in accordance with one of the preceding claims to clean polluted inflowing and outflowing air, especially the interiors of motor vehicles and the like.

23. Use of the process and/or of the device in accordance with one of the preceding claims to concentrate a component from process gases.

24. Use of the process and/or of the device in accordance with one of the preceding claims to concentrate hydrogen from fluid mixtures.

25. Use of the process and/or of the device in accordance with one of the preceding claims to separate air and/or to concentrate oxygen from air.

26. Use of the process and/or of the device in accordance with one of the preceding claims to dry gases and/or gas mixtures.

27. Use of the process and/or of the device in accordance with one of the preceding claims to separate inert gases.

28. Use of the process and/or of the device in accordance with one of the preceding claims to separate isotopes from mixtures containing fluid isotopes.

29. Use of the process and/or of the device in accordance with one of the preceding claims as a pre-concentration stage in combination with a pressure swing adsorber for the extraction of oxygen.

## Revendications

1. Procédé de séparation d'un mélange de fluides à au moins deux composants, comportant les étapes suivantes :
- mise en contact du mélange de fluides à une première température basse dans une première zone de travail avec une membrane de carbone adjacente à une surface d'une matrice de transport poreuse (1,2) ou rapportée sur une surface de la matrice (1, 2), au moins un composant fluide étant alors adsorbé et au moins un composant adsorbé du mélange de fluides traversant de manière préférentielle la membrane ; et en même temps,
- échauffement d'une partie et/ou d'une surface de la matrice de transport poreuse géographiquement distante de la membrane à une deuxième température, plus élevée, qui permet la désorption thermique des composants adsorbés dans une deuxième zone de travail, générant ainsi un gradient de concentration du ou des composants perméés de la surface de la membrane à travers la matrice de transport jusqu'à la deuxième zone de travail ;
- évacuation séparée du mélange de fluides appauvri en le ou les composants perméés hors de la première zone de travail et du mélange de fluides enrichi en le ou les composants perméés hors de la seconde zone de travail.

2. Procédé selon la revendication 1, **caractérisé en ce que** la membrane de carbone permet la perméation du ou des composants adsorbés et la matrice de transport permet le transport des composants perméés sensiblement par le même mécanisme de transport moléculaire.

3. Procédé selon l'une des revendications précédentes, **caractérisé en ce que** la perméation et le transport du ou des composants perméés s'effectuent essentiellement par migration superficielle des substances adsorbées.

4. Procédé selon l'une des revendications précédentes, **caractérisé en ce que** l'échauffement est assuré par un conducteur électrique chauffant (A, B).

5. Procédé selon l'une des revendications précédentes, **caractérisé en ce que** l'échauffement est obtenu par chauffage électrique direct d'une partie de la matrice de transport.

6. Procédé selon l'une des revendications précédentes, **caractérisé en ce que** l'échauffement est continu ou discontinu.

7. Procédé selon l'une des revendications précédentes, **caractérisé en ce que** le mélange de fluides enrichi en le ou les composants perméés de manière préférentielle est évacué de manière continue ou discontinue de la deuxième zone de travail, éventuellement par application d'un gradient de pression.

8. Procédé selon l'une des revendications précédentes, **caractérisé en ce que** les étapes de procédé énoncées à la revendication 1 sont répétées à plusieurs reprises successivement au niveau d'une pluralité d'ensembles membrane/matrice de transport montés en série.

9. Procédé selon l'une des revendications précédentes, **caractérisé en ce que** le mélange de fluides obtenu dans la première zone de travail est recyclé en vue d'un appauvrissement supplémentaire et/ou est utilisé pour refouler le mélange de fluides appauvri obtenu dans la première zone de travail d'un procédé en aval.

10. Procédé selon l'une des revendications précédentes, **caractérisé en ce que** le mélange de fluides obtenu dans la deuxième zone de travail est recyclé en vue d'un enrichissement supplémentaire et/ou est utilisé pour refouler les composants désorbés obtenus dans la deuxième zone de travail d'un procédé en aval.

11. Procédé selon l'une des revendications précédentes, **caractérisé en ce que** le mélange de fluides appauvri en composants perméants est collecté dans la première zone de travail.

12. Procédé selon l'une des revendications précédentes, **caractérisé en ce que** le mélange de fluides enrichi en composants perméants est collecté dans la deuxième zone de travail.

13. Mise en oeuvre du procédé selon la revendication 1, comprenant une membrane en carbone adjacente à ou rapportée sur une surface d'une matrice de transport poreuse (1, 2), la membrane jouxtant une première zone de travail et une autre surface de la matrice de transport, géographiquement distante de la membrane, jouxtant une deuxième zone de travail, ainsi que des dispositifs (A, B) de chauffage de la surface et/ou d'une partie de la matrice de transport, située au niveau de la deuxième zone de travail.

14. Dispositif selon la revendication 13, **caractérisé en ce que** la matrice de transport (1, 2) est en forme de plaque ou de tube.

15. Dispositif selon l'une des revendications 13 et 14, **caractérisé en ce que** la matrice de transport (1, 2) contient du charbon actif, en particulier du charbon actif fritté avec une surface BET supérieure à 200 m²/g, de préférence supérieure à 500 m²/g, voire supérieure à 800 m²/g, de manière particulièrement préférentielle supérieure à 1000 m²/g et de manière encore plus préférentielle supérieure à 1200 m²/g.

16. Dispositif selon l'une des revendications 13 à 15, **caractérisé en ce que** les dispositifs (A, B) de chauffage du côté désorption de la matrice de transport comprennent un tube radiant de chauffage, une lampe tubulaire, un conducteur électrique chauffant, un chauffage par induction, lesquels peuvent éventuellement être intégrés dans une partie de la matrice de transport, ou encore le chauffage électrique direct d'une partie électriquement conductrice de la matrice de transport.

17. Dispositif selon l'une des revendications 13 à 16, **caractérisé en ce que** sont prévus, dans la première zone de travail, des dispositifs d'alimentation et d'évacuation de mélange de fluides, et, dans la deuxième zone de travail, des dispositifs (3) d'évacuation du mélange de fluides enrichi en un ou plusieurs composants.

18. Dispositif de séparation d'un mélange de fluides, **caractérisé en ce que** plusieurs dispositifs selon l'une des revendications 13 à 17 sont exploités en série.

19. Dispositif selon l'une des revendications 13 à 18, **caractérisé en ce que** dans la première zone de travail, on met de l'air en contact avec la surface de la membrane et **en ce que** dans la deuxième zone de travail, on récupère de l'air enrichi en oxygène.

20. Dispositif selon l'une des revendications 13 à 19, **caractérisé en ce que** la deuxième zone de travail est composée de canaux (3) agencés dans une matrice de transport en forme de plaque (1), qui présente, de part et d'autre, des surfaces lamellaires (2) agencées parallèlement entre elles et perpendiculairement au plan de la plaque et sur lesquelles est rapportée la membrane de carbone.

21. Dispositif selon la revendication 20, **caractérisé en ce que** le flux d'un chauffage électrique direct (A, B) est guidé le long des surfaces en forme de plaque (1) de la matrice de transport perpendiculairement au plan principal des lamelles (2).

22. Mise en oeuvre du procédé et/ou du dispositif selon l'une des revendications précédentes pour la purification d'air entrant ou sortant pollué, en particulier pour l'habitacle de véhicules ou analogues.

23. Mise en oeuvre du procédé et/ou du dispositif selon l'une des revendications précédentes pour augmenter la concentration d'un composant à partir de gaz de process.

24. Mise en oeuvre du procédé et/ou du dispositif selon l'une des revendications précédentes pour augmenter la concentration d'hydrogène à partir de mélanges de fluides.

25. Mise en oeuvre du procédé et/ou du dispositif selon l'une des revendications précédentes pour séparer l'air et/ou augmenter la concentration d'oxygène à partir de l'air.

26. Mise en oeuvre du procédé et/ou du dispositif selon l'une des revendications précédentes pour sécher des gaz et/ou des mélanges gazeux.

27. Mise en oeuvre du procédé et/ou du dispositif selon l'une des revendications précédentes pour séparer des gaz nobles.

28. Mise en oeuvre du procédé et/ou du dispositif selon l'une des revendications précédentes pour séparer des isotopes dans des mélanges contenant des isotopes fluides.

29. Mise en oeuvre du procédé et/ou du dispositif selon l'une des revendications précédentes en tant qu'étape de pré-enrichissement en liaison avec un adsorbeur à modulation de pression en vue de la production d'oxygène.
